**Europäisches Patentamt**

(19) **European Patent Office**

**Office européen des brevets**

(11) Publication number : **0 490 621 A1**

(12) # EUROPEAN PATENT APPLICATION

(21) Application number : **91311448.4**

(22) Date of filing : **09.12.91**

(51) Int. Cl.⁵ : **C09K 11/66, H01J 61/44**

Amended claims in accordance with Rule 86 (2) EPC.

(30) Priority : **10.12.90 US 625182**

(43) Date of publication of application : **17.06.92 Bulletin 92/25**

(84) Designated Contracting States : **DE NL**

(71) Applicant : **GTE PRODUCTS CORPORATION**
**100 W. 10th Street**
**Wilmington, Delaware (US)**

(72) Inventor : **Chau, Chung-Nin**
**420 1/2 Desmond Street**
**Sayre, PA 18840 (US)**
Inventor : **Kasenga, Anthony F.**
**331 York Avenue**
**Towanda, PA 18848 (US)**
Inventor : **Chenot, Charles F.**
**R.D. No. 3, Box 100**
**Towanda, PA 18848 (US)**

(74) Representative : **Bubb, Antony John Allen et al**
**GEE & CO. Chancery House Chancery Lane**
**London WC2A 1QU (GB)**

(54) **Manganese-activated zinc silico-germanate phosphor and method of making same.**

(57) A green-emitting manganese-activated zinc silico-germanate fluorescent lamp phosphor has between 1 and 40 mole percent of the silicate replaced with germanate and has the formulation $Zn_{2-x}Mn_x(SiO_4)_{1-y}(GeO_4)_y$, wherein x is between about 0.10 and about 0.14 and wherein y is between about 0.01 and about 0.40.

EP 0 490 621 A1

This invention relates to manganese-activated zinc silicate phosphors used in fluorescent lamps.

Manganese-activated zinc silicate is known to be an efficient green-emitting phosphor of the willemite-type crystal structure. Such phosphors may be blended with red-emitting and blue-emitting phosphors to obtain a precise emission color point for fluorescent lamp applications. By varying the relative percentages of the phosphor components, the emission spectrum of a fluorescent lamp can be adjusted.

Substitution of germanium for silicon and vice versa in fluorescent lamp phosphors is known. The substitution of germanium for silicon causes the emission color of the phosphor to shift toward the red (lower energy) portion of the spectrum. U.S. Patent 3,644,212 to McAllister et al. describes a manganese-activated zinc magnesium silico-germanate phosphor in which germanium dioxide, $GeO_2$, is substituted for a portion of the silicon dioxide, $SiO_2$. U.S. Patent 3,458,452 to Hummel et al. describes a manganese-activated zinc magnesium germanate phosphor in which silicate, $SiO_4$, is substituted for a portion of the germanate, $GeO_4$.

The prior art phosphors contain magnesium which, when integrated into the host lattice of the phosphor, improves the initial brightness and maintenance of a fluorescent lamp made with these phosphors.

Zinc silicate phosphors are typically made with a significant excess of the silicon source, e.g., silicon dioxide or silicic acid. Silicon is not very reactive and requires an excessive amount to react with the manganese activator. A drawback to the use of excessive amounts of silicon is that phosphor brightness is decreased.

It is an object of the invention to provide a green-emitting manganese-activated zinc silico-germanate fluorescent lamp phosphor having the formulation $Zn_{2-x}Mn_x(SiO_4)_{1-y}(GeO_4)_y$, wherein x is between about 0.10 and about 0.14 and wherein y is between about 0.01 and about 0.40.

It is another object of the invention to provide a green-emitting manganese-activated zinc silico-germanate fluorescent lamp phosphor in which its emission color coordinates are shifted towards the red and blue portions of the emission spectrum.

In accordance with the present invention there is provided a green-emitting manganese-activated zinc silico-germanate fluorescent lamp phosphor having the formulation $Zn_{2-x}Mn_x(SiO_4)_{1-y}(GeO_4)_y$, wherein x is between about 0.10 and about 0.14 and wherein y is between about 0.01 and about 0.40, and a method of making the same, comprising the steps of blending appropriate amounts of precursor materials together to form a uniform mixture; firing the mixture at a suitable temperature for a suitable time to form the phosphor; milling the phosphor in a weakly acidic solution to promote stable bonding of the manganese activator ion within the phosphor crystal structure; and filtering and drying the phosphor.

The substitution of germanate for a portion of the silicate in a manganese-activated zinc silicate phosphor results in improved brightness and maintenance, without the incorporation of magnesium in the host lattice of the phosphor. The use of excess quantities of silica in the reaction is also avoided, since germanate reacts more readily than silicate and thus accelerates the completion of the reaction.

The substitution of germanate for silicate shifts the emission spectrum of the phosphor away from the green portion of the spectrum and towards the red portion. This shift in emission color increases the redness and blueness of a green-emitting phosphor, so that less of the more expensive red-emitting and blue-emitting phosphors is required in a tri-color blending process to achieve a desired color point.

The method of this invention involves the stoichiometric substitution of germanium ions for a portion of the silicon ions in manganese-activated zinc silicate phosphor. A solid solution of germanate and silicate is thus formed. Because germanium has a slightly larger atomic radius than silicon, the dimensions of the zinc silicate host lattice change slightly to accommodate the difference in atom size.

The substitution of germanium into silicon sites causes a shift in emission color toward the red (lower energy) portion of the emission spectrum. The configuration of a manganese-activated zinc silicate phosphor can be visualized by assuming that the activator (manganese) is a positively-charged ion surrounded by negatively-charged ions (silicates). Activator centers are formed when several of these activator "clusters" are brought close together. Both positive and negative forces are exerted on these activator centers as a result of coulombic attractive forces between ions of opposite charge and repulsive forces from overlapping electron clouds. The potential energy of both the ground (unexcited) state and the excited state of the phosphor is thus influenced by the symmetry of the activator site and the distance between the activator ions. Changes in the dimensions of the host lattice (e.g., in the distances between activator ions) will therefore affect the emission spectrum of the phosphor.

The emission color coordinates of a fluorescent lamp phosphor indicate the relative amounts of red, green and blue components of the phosphor. Fluorescent lamp phosphors are typically comprised of red-, green- and blue-emitting phosphors which are carefully blended in appropriate proportions to yield a phosphor which emits in a desired portion of the emission spectrum. Manganese-activated zinc silicate phosphors with no germanate emit in the green portion of the emission spectrum, at around 528nm. (Peak, or brightest, green emission occurs at about 540nm.) As previously discussed, the substitution of germanium for a portion of the silicon in this phosphor causes a shift in emission color towards the red, or lower energy (higher wavelength), portion of the spectrum. Although this phosphor still emits in the green portion of the emission spectrum, it has a higher proportion of redness and a lower proportion of greenness than the manganese-activated zinc silicate phosphor absent the germanate. However, because of the color shift towards the higher-wavelength portion of the spectrum, the brightness of the phosphor is increased as the emission color approaches the 540nm peak green emission point.

When the green-emitting phosphor made by the method of this invention is blended with red-emitting and blue-emitting phosphors to produce a tri-color blended fluorescent lamp phosphor, less of the red-emitting and blue-emitting phosphors are needed to obtain the desired emission color point. These red- and blue-emitting phosphors are typically rare earth phosphors which are relatively expensive to produce when compared with a zinc silicate green-emitting phosphor. Thus, the use of germanate for a portion of the silicate in manganese-activated zinc silicate phosphors reduces the cost of tri-color phosphor blends without sacrificing the desired color characteristics. Furthermore, as mentioned above, such germanate substitution for a portion of the silicate results in an increase in brightness as the emission color shifts to a lower energy portion of the spectrum.

The composition of the phosphor made by the method of this invention is $Zn_{2-x}Mn_x(SiO_4)_{1-y}(GeO_4)_y$, where x is between about 0.10 and about 0.14, and y is between about 0.01 and about 0.4. The preferred phosphor formulation is $Zn_{1.886}Mn_{0.114}(SiO_4)_{0.60}(GeO_4)_{0.40}$.

When germanate is incorporated into the zinc silicate host lattice, excess silicon is no longer needed to drive the reaction. The substitution of germanium for a portion of the silicon in the phosphor of this invention drives the reaction to completion and also has a beneficial effect on phosphor brightness.

To make the phosphor of the present invention, a source of zinc is combined with a source of silicon, a source of manganese, a flux compound, a source of tungsten and a source of germanium and blended to form a uniform mixture. The mixture is fired for between 4 and 6 hours at a temperature of between 1150°C and 1250°C. The fired cake is then milled in a weak organic acid for between 30 minutes and 1 hour. The milled phosphor is then filtered and dried.

Typical weak organic acids include citric acid, $HO(CH_2CO_2H)_2CO_2H$, and ethylenediaminetetraacetic acid, $(HOOCCH_2)_2NCH_2CH_2N(CH_2COOH)$, abbreviated as EDTA. The preferred acid is citric acid. These acids have a chelating effect on metal ions and act to bind the manganese activator ion to the silicate and germanate ions in a stable ring structure.

Ammonium halide compounds are used in the reaction as fluxes which promote the formation of intermediate compounds before manganese silicates and manganese germanates are formed. The intermediate compounds so formed are relatively more reactive than silicon alone and thus help to drive the reaction to completion. The preferred ammonium halide flux compounds are ammonium chloride, $NH_4Cl$, and ammonium fluoride, $NH_4F$.

A minute amount of tungsten in the form of tungsten oxide is used in the reaction. The tungsten does not become part of the phosphor but rather acts to promote the formation of a solid solution of manganese silicates and manganese germanates.

Germanium in the form of germanium dioxide is substituted for the silicon in amounts of about 1 to 40 mole percent. The maximum brightness increase and emission color shift in manganese-activated zinc silico-germanate phosphor is obtained when about 40 mole percent of germanium is substituted for silicon. Germanium concentrations greater than about 40 mole percent of the silicon do not appear to have additional beneficial effect on either brightness or emission color. The substitution of as little as 1 mole percent of germanium for the silicon in a manganese-activated zinc silicate phosphor results in an improvement in initial fluorescent lamp brightness and in 100-hour maintenance over fluorescent lamps made with manganese-activated zinc silicate phosphors absent the germanium.

The following examples are presented.

EXAMPLE I

The following raw materials are weighed and combined in a V-blender and are blended to form a uniform mixture:

| Zinc oxide | 316.34 grams | (2 moles) |
|---|---|---|
| Silicon dioxide | 0.5 grams | (0.0043 mole) |
| Silicic acid | 147.79 grams | (1.077 mole) |
| Manganese carbonate | 29.54 grams | (0.1217 mole) |
| Ammonium chloride | 4.83 grams | (0.0465 mole) |
| Ammonium fluoride | 0.288 grams | (0.004 mole) |
| Tungsten oxide | 0.521 gram | (0.00116 mole) |

The blended mixture is transferred to an alumina crucible and covered. The material is fired in a travelling furnace programmed to heat up from about 700°C to about 1250°C within 30 minutes. The material is then fired at 1250°C for 4 to 6 hours, after which the temperature is ramped down from 1250°C to about 700°C within about 60 minutes. The temperature ramping is desired to allow the alumina crucibles to heat up and cool down uniformly, avoiding thermal cracking. The fired material is then ball milled for about 30 minutes to 60 minutes in a weak citric acid solution comprising about 0.2% citric acid per unit of phosphor powder. The milled material is then filtered and dried.

EXAMPLE II

The procedure of Example I is followed, except that the molar ratio of silicic acid is decreased in proportion to the amount of germanium dioxide added:

| Silicic acid | 140.93 grams | (1.027 moles) |
|---|---|---|
| Germanium dioxide | 10.17 grams | (0.05 mole) |

EXAMPLE III

The procedure of Example I is followed with a further decrease in the molar ratio of silicic acid and a proportional increase in the amount of germanium dioxide:

| Silicic acid | 127.21 grams | (0.927 mole) |
|---|---|---|
| Germanium dioxide | 30.50 grams | (0.15 mole) |

EXAMPLE IV

The procedure of Example I is followed with a further decrease in the molar ratio of silicic acid and a proportional increase in the amount of germanium dioxide:

| Silicic acid | 92.90 grams | (0.677 mole) |
|---|---|---|
| Germanium dioxide | 81.33 grams | (0.40 mole) |

Table I indicates the plaque color and relative brightness of the phosphors made in Examples I through IV.

## TABLE I: PLAQUE COLOR AND RELATIVE BRIGHTNESS OF $Zn_{1.886}Mn_{0.114}(SiO_4)_{1-y}(GeO_4)_y$ IN WHICH VARYING AMOUNTS OF GERMANIUM IS SUBSTITUTED FOR SILICON

| y | CHROMATICITY | | % BRIGHTNESS | PEAK EMISSI |
|---|---|---|---|---|
| | X | Y | | |
| 0 (control) | 0.2582 | 0.6904 | 100.0 % | 528 |
| 0.05 | 0.2681 | 0.6804 | 104.8 % | 529 |
| 0.15 | 0.2961 | 0.6638 | 105.4 % | 532 |
| 0.40 | 0.3158 | 0.6514 | 105.6 % | 534 |

It is evident from the data that as the amount of germanate in the composition increases, the emission color shifts toward higher X (more red) and lower Y (less green). The peak emission wavelength also increases with increasing germanate.

## Claims

1. A method of making a green-emitting manganese-activated zinc silico-germanate fluorescent lamp phosphor having the formulation $Zn_{2-x}Mn_x(SiO_4)_{1-y}(GeO_4)_y$, wherein x is between about 0.10 and about 0.14 and wherein y is between about 0.01 and about 0.40, comprising the steps of:
    a) blending appropriate amounts of precursor materials together to form a uniform mixture;
    b) firing said mixture at a suitable temperature for a suitable time to form said phosphor;
    c) milling said phosphor in a weakly acidic solution to promote stable bonding of the manganese activator ion within the phosphor crystal structure; and
    d) filtering and drying said phosphor.

2. The method of claim 1 wherein said precursor materials consist essentially of a source of zinc, a source of silicon, a source of manganese, a flux, a source of tungsten and a source of germanium.

3. The method of claim 2 wherein said source of zinc is zinc oxide.

4. The method of claim 2 wherein said source of silicon comprises silicon dioxide and silicic acid.

5. The method of claim 2 wherein said source of manganese is manganese carbonate.

6. The method of claim 2 wherein said flux is comprised of ammonium halide compounds.

7. The method of claim 2 wherein said source of tungsten is tungsten oxide.

8. The method of claim 2 wherein said source of germanium is germanium dioxide.

9. The method of claim 6 wherein said ammonium halides comprise ammonium chloride and ammonium fluoride.

10. The method of claim 1 wherein said formulation of said green-emitting manganese-activated zinc silico-germanate fluorescent lamp phosphor is $Zn_{1.886}Mn_{0.114}(SiO_4)_{0.60}(GeO_4)_{0.40}$.

11. The method of claim 1 wherein said mixture is fired at 1150°C to 1250°C for about 4 to 6 hours.

12. The method of claim 1 wherein said weakly acidic solution is selected from the group consisting of citric acid and ethylenediaminetetraacetic acid.

13. The method of claim 12 wherein said weakly acidic solution is citric acid.

14. A green-emitting manganese-activated zinc silico-germanate fluorescent lamp phosphor having the formulation $Zn_{2-x}Mn_x(SiO_4)_{1-y}(GeO_4)_y$, wherein x is between about 0.10 and about 0.14 and wherein y is between about 0.01 and about 0.40.

15. The green-emitting manganese-activated zinc silico-germanate fluorescent lamp phosphor of claim 14 wherein said formulation of said phosphor is $Zn_{1.886}Mn_{0.114}(SiO_4)_{0.60}(GeO_4)_{0.40}$.

EP 0 490 621 A1

# EUROPEAN SEARCH REPORT

**European Patent Office**

Application Number

EP    91 31 1448

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | WORLD PATENTS INDEX LATEST<br>Derwent Publications Ltd., London, GB;<br>AN 82-16378E<br>& JP-A-57 010 676 (KASEI OPTONIX) 20 January 1982<br>* abstract * | 1,3,4,8,<br>10,11,14 | C09K11/66<br>H01J61/44 |

|  |  |  | TECHNICAL FIELDS SEARCHED (Int. Cl.5) |
|---|---|---|---|
|  |  |  | C09K<br>H01J |

The present search report has been drawn up for all claims

| Place of search | Date of completion of the search | Examiner |
|---|---|---|
| THE HAGUE | 11 MARCH 1992 | DROUOT M.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

7